# EUROPEAN PATENT SPECIFICATION

(11) **EP 1 570 191 B1**
(45) Date of publication and mention of the grant of the patent: **07.05.2008**
(21) Application number: 03779059.9
(22) Date of filing: 05.12.2003
(51) Int. Cl.: F16G 5/16, B21D 53/14

(54) **METHOD FOR PRODUCING A TRANSVERSE ELEMENT FOR A PUSH BELT FOR A CONTINUOUSLY VARIABLE TRANSMISSION**
VERFAHREN ZUM HERSTELLEN EINES QUERELEMENTS FÜR EINEN SCHUBTREIBRIEMEN FÜR EIN STUFENLOS REGELBARES GETRIEBE
PROCEDE DE PRODUCTION D'UN ELEMENT TRANSVERSAL POUR POUSSE-COURROIE DE BOITE DE VITESSES A VARIATION CONTINUE

(30) Priority: 06.12.2002 NL 1022094
(43) Date of publication of application: 07.09.2005
(73) Proprietor: Van Doorne's Transmissie B.V., 5000 AM Tilburg (NL)
(72) Inventor: VAN OIRSCHOT, Cornelis, Hendricus, Maria, NL-5018 EN Tilburg (NL); VAN LITH, Johannes, Hendrikus, NL-5258 PL Berlicum (NL)
(86) International application number: PCT/NL2003/000866
(87) International publication number: WO 2004/053355

(56) References cited:
- EP-A- 0 366 169
- EP-A- 1 158 204
- EP-A- 1 243 812
- EP-A- 1 283 379

## Description

The present invention relates to a method for producing a transverse element for a push belt for a continuously variable transmission.

A transverse element and push belt of this type for a continuously variable transmission are generally known. The push belt generally comprises two sets of endless, continuous flat belts, also known as rings, which function as supports for a relatively large number of transverse elements. The transverse elements are arranged moveably over the circumference of the rings, so that during operation they are able to transmit forces associated with a movement of the push belt. To provide contact between the transverse element and pulley discs of a pulley of a continuously variable transmission, the transverse element is provided on either side, in the width direction, with running surfaces which diverge in the vertical direction and are intended to make contact with the pulley discs. The terms "up" and "down" where they are used in the text which follows relate to the direction of divergence of contact surfaces from the bottom upwards. A longitudinal direction of the transverse element corresponds to a peripheral direction of the push belt. A height direction of the transverse element corresponds to a radial direction of the push belt. A width direction of the transverse element corresponds to a direction at right angles to both the longitudinal direction and the height direction.

The transverse element has two main body surfaces, namely a front surface and a back surface, which extend substantially parallel to one another, substantially at right angles to the longitudinal direction. In the width direction, the transverse element is provided on either side with recesses for at least partially accommodating the sets of rings. Each recess has a bottom surface, a top or locking surface and a side face. The bottom surface comprises a support surface which is used to support a set of rings and which, via a curved transition surface, adjoins the side face of the recess, the transition surface being located at least substantially at a slightly lower level than the support surface. The transverse element also comprises a bottom or base section, a central or bridge section, the dimensions of which are smaller in the width direction than those of the base section, and more or less an arrowhead-shaped uppermost or top section, the dimensions of which in the width direction are larger than those of the bridge section. The base section comprises the support surfaces and the contact surfaces, the bridge section comprises the side faces of the recesses and the top section comprises the locking surfaces.

A process for producing the transverse element is generally known and comprises at least two process steps. In a first process step, or forming step, the transverse element is cut out of base material in plate form by means of an accurate punching process. In a second process step or remachining step, the entire transverse element is subjected to a deburring process, for which the known drum process is generally used. The purpose of the remachining step is to deburr the cut surfaces formed in the punching process at the transitions between the main body surfaces and the side faces of the elements provided there between. Furthermore, EP-A 0 366 169 has also disclosed a third process step, which comprises a separate treatment of the side faces of the recesses and in which these faces are additionally processed and rounded with a relatively large rounding radius, for example with the aid of a grinding belt. This is to prevent the transverse elements from being able to damage the rings in the event of contact between them in the width direction.

The document EP1283379 published on 12.02.2003 and claiming priority date of 10.08.2001 is comprised in the state of the art according to Art.54(3)EPC and describes a similar belt for continuous variable transmission.

In practice, it has been found that unexpected breaking of the transverse elements may occur in the base section, with one end of the fracture line located in the transition surface between the support surface and the side face of the recess, without it being possible to establish any clear cause and despite the relatively high quality and dimensional accuracy of the transverse elements.

It is an important object of the present invention to provide a suitable method for producing a transverse element which creates a transverse element with a reduced risk of fracturing without the design of the transverse element and in particular its dimensions being significantly altered. A push belt in which the transverse elements according to the invention are used then has the advantage that on the one hand, while retaining a virtually constant service life, it can transmit more power between the pulleys or, on the other hand, it can have a longer operational (fatigue) service life, or at least does not have to be produced with the same level of accuracy.

The invention is partly based on a hypothesis formulated on the basis of experimental data that the abovementioned fracture is a fatigue fracture which was initiated at the surface of the said transition surface. According to the invention, when the push belt is in use, the transverse element is after all under fatigue load, on account of the clamping forces acting on the running surfaces by the pulley discs on alternating sides, which on account of their inclined position not only result in a compressive stress in the base section but also lead to a tensile stress, which are concentrated at the location of the curved transition surface on account of the notch effect originating therefrom. However, this tensile stress per se cannot explain the abovementioned fracture.

According to the invention, the abovementioned fracture can be explained on account of the fact that during operation an unexpected and previously undescribed additional stress-intensifying effect occurs, namely elastic bending of the base section, side parts of which are displaced in the longitudinal direction with respect to a centrally located middle section of the base section. According to the invention, the latter phenomenon is caused by the fact that the central section is slightly thicker than the sides, i.e. has a slightly larger dimension in the said longitudinal direction, so that there is a certain play between adjacent transverse elements at the location of the side parts.

According to the invention, the occurrence of the abovementioned thicker central section is an unforeseen consequence of the punching process, which has previously remained unnoticed. A geometry of the transverse element of this nature means that a pushing force between two transverse elements in the first instance acts at the location of the abovementioned thicker central section, while a frictional force between the transverse elements and the pulley discs engages on the running surfaces on either side of the base section. This gives rise to a couple of forces, with the result that a bending load is applied to the transverse elements, which can cause the transverse element to bend until it adopts a position in which the said pushing force is acting on the side parts as well as on the thicker central section.

It should be noted that the play is very small, of the order of magnitude of just a few micrometers. Therefore, the obvious conclusion would be to treat the measured relative elevation of the central section as negligible. The present invention is partly based on the insight that the relative elevation of the central section is in fact a significant factor in the occurrence of fractures in the transverse element, since the effect of the bending of the transverse element is more or less cumulative, meaning that a bent transverse element of this type has to bend further when it bears against a preceding transverse element which itself has also bent as a result of the play of forces described above. A first transverse element in a series of bent transverse elements bearing against one another will then bend considerably, even if the degree of thickening of the central section for each individual transverse element is relatively small.

Therefore, the present invention proposes to reduce the risk of fracture in the transverse elements by making the transition surface between the support surface and the side face of the recess better able to withstand high loads and fatigue. According to the present invention, the object set can advantageously be achieved, in combination with the known production process for the transverse elements, by introducing an additional processing step into the production process, which is preceded at least by the abovementioned forming step and relates to the processing of the transition surface.

A first possible option according to the invention is to apply a compressive stress in the transition surface, preferably extending a certain distance into the material of the transverse element. This at least partially compensates for the tensile stresses which are active at that location during operation, so that the risk of a fatigue crack forming can be considerably reduced.

In a more detailed embodiment of the first option according to the invention, a shot-peening process is used to apply the abovementioned compressive stress. In the shot-peening process, the transition surface is processed by being blasted with relatively small, rounded steel shot - in contradistinction to an angular abrasive which is used in generally known deburring and/or rounding processes - which leads to an internal compressive stress building up in the vicinity of the surface as a result of plastic deformation. To achieve a good and reproducible result, it is preferable for the hardness of the shot to at least be higher than the hardness of the transverse elements after the forming step has ended. According to the invention, the shot-peening process can advantageously be carried out as a bulk process, in which the entire surface is treated, since it has been found that it is possible to select process settings which are such that the quality of functional surfaces of the transverse element, such as the support surfaces and the running surfaces, are not or are scarcely adversely affected. Particularly good results can be achieved if the transverse elements are only subjected to the abovementioned deburring process after the shot-peening process. In the latter case, any irregularities on the surface caused by the shot-peening can advantageously be removed during the remachining step.

However, during the shot-peening process there is a risk of in particular the support surface being permanently damaged, which is extremely undesirable, since damage of this nature has an adverse effect on the service life of the support and therefore that of the push belt. To avoid this risk, in yet a further embodiment of the first option according to the invention, it is proposed to use a nitriding process as an alternative processing step for applying the abovementioned compressive stress. In the known nitriding process, the transverse element is placed in a nitrogen-containing atmosphere at an elevated temperature. In this atmosphere, nitrogen will be dissolved as an interstitial atom from the surface into the metal lattice of the transverse element over a process-dependent depth, producing a very localized compressive stress. A process of this nature has the particular advantage that the set of process steps which lead to the manufacture of the push belt generally already encompasses a nitriding process, namely the nitriding of the rings, and consequently the introduction of a second nitriding process will be considered particularly cost-effective.

A second possible option according to the invention for an additional processing step in the production process for transverse elements is partly based on practical tests which were carried out to validate the hypothesis described above and for which an analysis of the results indicates a correlation between the phenomenon of the abovementioned fracture and the surface roughness of the transition surface, as is quantified, for example, by the known, generally used roughness value Rₐ In this second option according to the invention, it is proposed to improve the surface quality of the transition surface by reducing its roughness value compared to the roughness value after the forming step has ended, for example by applying a smooth covering layer to the transition surface or by abrasively machining this surface. As a result, according to the invention it is possible to considerably reduce the risk of a fatigue crack being initiated at an uneven structure on the transition surface. According to the invention, in particular in this second option, it may be particularly advantageous for the additional processing step to be such that it is only active at the location of the transition surface, while other parts of the transverse element remain virtually unaffected. This is because different functional requirements are imposed on the different parts and surfaces of the transverse element. One example of this is the running surfaces of the transverse element, for which a certain minimum roughness value may be required for the purpose of efficient transmission of forces between pulley and belt through friction.

The invention will now be explained in more detail on the basis of a number of embodiments and with reference to the figures.

Figure 1 shows a diagrammatic side view of a continuously variable transmission with a push belt.

Figure 2 shows a front view and a side view of a transverse element for a push belt for a continuously variable transmission.

Figure 3 illustrates the known punching process for forming transverse elements from base material in strip form on the basis of a diagrammatic cross section through a punching device.

Figure 4 shows a front view and a side view of a transverse element, diagrammatically depicting a grinding belt for machining parts of the surface of the transverse element according to the invention.

Figure 5 shows a front view and a plan view of a transverse element, diagrammatically depicting a part of a device for the electrochemical machining of the surface of the transverse element according to the invention.

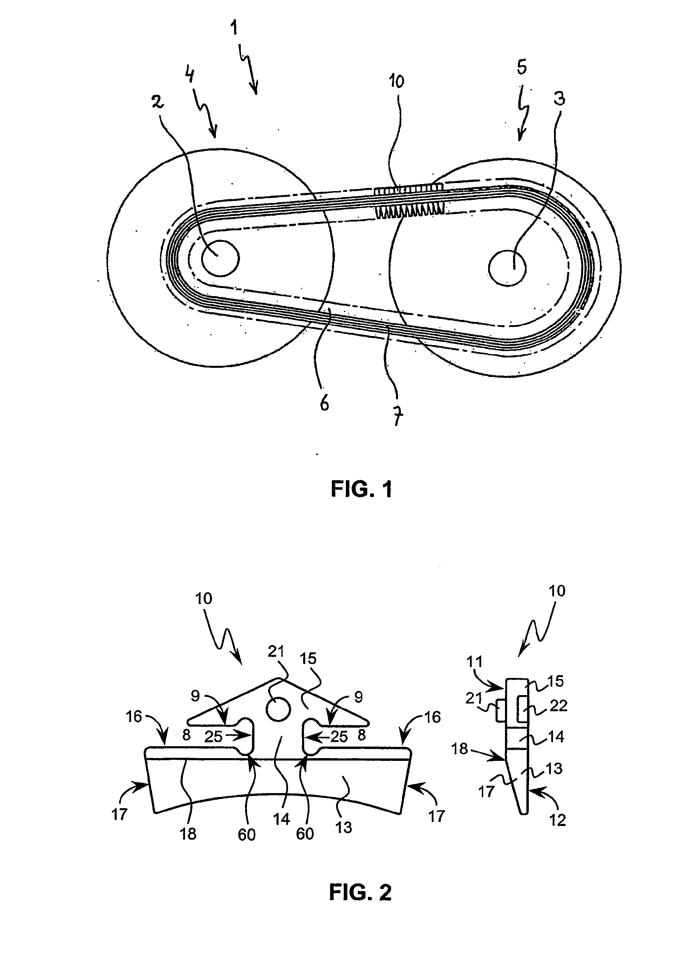

Figure 1 diagrammatically depicts a continuously variable transmission, which is denoted overall by reference numeral 1, such as for use in a motor vehicle. The continuously variable transmission 1 comprises two pulleys 4, 5 arranged on separate pulley axles 2, 3. An endless, continuous push belt 6 is fitted over the pulleys 4,5 and is used to transmit mechanical power between the pulley axles 2, 3. It is generally the case that each of the pulleys 4, 5 comprises two pulley discs (not shown), between which the push belt 6 is positioned and, when the transmission is operating, clamped, so that a force can be transmitted with the aid of friction between them.

The push belt 6 comprises at least one endless support 7, which is generally composed of a number of concentric stacked flat belts or rings. Transverse elements 10 are arranged over the entire periphery of the support 7, it being possible for the transverse elements 10 to move in the peripheral direction with respect to the support 7. For the sake of simplicity, Figure 1 only shows some of the transverse elements 10. The support 7 and the transverse elements 10 are generally made from metal. It should be noted that in a transmission 1 of this type, a force or rotation can be transmitted between the two pulleys 4, 5 by the transverse elements 10 of the driving pulley, for example pulley 4, being pushed into the other pulley 5, which is then driven as a result, the support 7 being used primarily to support and guide the transverse elements 10.

Figure 2 shows a front view and a side view of a transverse element 10 for the push belt 6. A main front surface of the transverse element 10 is denoted overall by reference numeral 11, while a main back surface of a transverse element 10 is denoted overall by reference numeral 12. In the vertical direction, the transverse element 10 successively comprises a base section 13, a bridge section 14 and an arrowhead-shaped top section 15. In the base section 13, the main front surface 11 is provided with what is known as a tilting zone 18, which is generally formed as a convex transition surface which forms an even and rounded transition between two parts of the main front surface 11 which are oriented at a slight angle with respect to one another. In the push belt, two adjacent transverse elements 10 can be tilted with respect to one another via this tilting zone 18. The base section 13 also comprises two running surfaces 17 which are intended to come into contact with the pulley discs. Furthermore, the transverse element is also provided with a projection 21 and a recess 22, the projection 21 of the transverse element 10 in the push belt 6 at least predominantly being located in the recess 22 of a subsequent transverse element 10, in order to limit displacement of adjacent transverse elements 10 with respect to one another.

In the width direction, the transverse element 10 is provided on either side with recesses 8 for at least partially receiving the supports 7. Each of the two recesses 8 has a support surface 16 which is used to support the support 7, a locking surface 9, which is used to lock the support 7 in the vertical direction, and a side face 25, which locks the support 7 in the width direction. A transition surface 60 is provided between the support surface 16 and the side face 25 of the recess 8. The transition surface 60 on the one hand provides a rounded transition between the support surface 16 and the side face 25 and on the other hand the fact that the transition surface 60 is positioned at a lower level than the said support surface 16 ensures that the support 7 will remain positioned centrally on the support surface, i.e. it will not start to move forcibly onto the bridge section 14. The invention relates in particular to the processing of this transition surface 60.

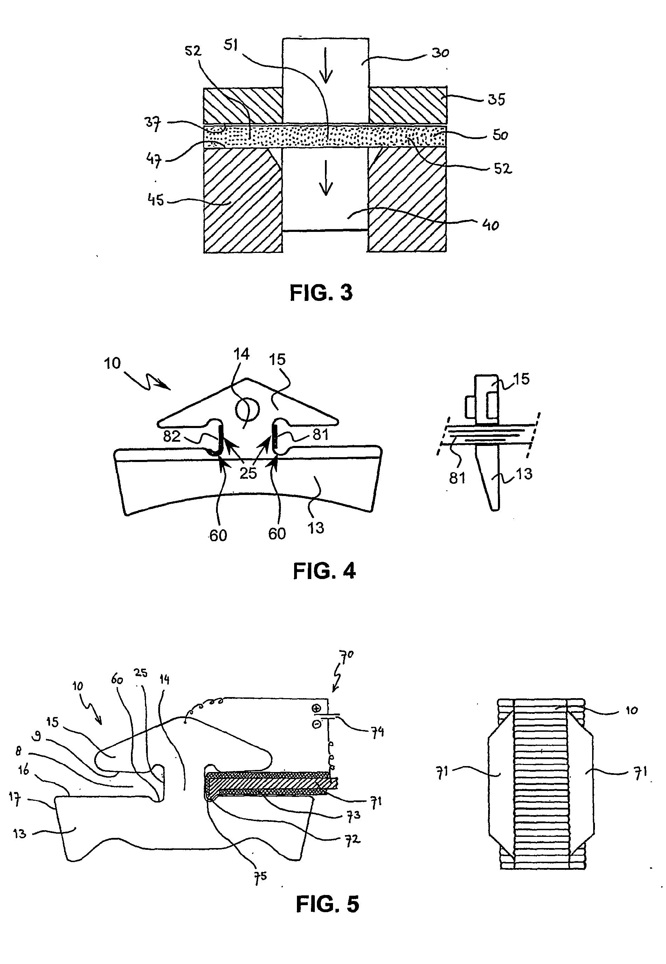

To illustrate the forming step, Figure 3 diagrammatically depicts a punching process and device which can be used to cut a product 51 which is to be formed, in this case the transverse element 10, out of base material 50 in plate form. The known punching device comprises a die 45 and a guide plate 35, between which parts 52 of the base material 50 are clamped during punching via the surfaces 37 and 47 thereof. The device also comprises a cutting member 30 and, in line with the latter, a support member 40. The periphery of both the cutting member 30 and the support member 40 substantially corresponds to the periphery of the transverse element 10 which is to be punched and is cut out in a coordinated way by a movement of the cutting member 30 indicated by the arrow, with the support member 40 exerting an oppositely directed force but at the same time also following the movement of the cutting member 30. The cut edges of the product 51 formed during the punching process, in the transverse element 10, comprise the running surfaces 17, the support surfaces 16, the transition surface 60, the side face 25 and the locking surface 9, which surfaces have a roughness value which is defined by the punching process.

According to the invention, it is advantageous for the forming step to be followed by an additional processing step in which the transverse element 10, in particular at the location of the abovementioned transition surfaces 60, is to be made better able to withstand high loads and fatigue. In this context, the invention provides two fundamentally different options for the additional processing step. First, according to the invention, it is possible to carry out the processing step in such a manner that a compressive stress is applied to the material of the transverse element 10 at least at the location of the transition surface 60. Second, according to the invention it is advantageously possible to carry out the processing step in such a manner that the roughness value Rₐ of the transition surface 60 is reduced.

In a more detailed embodiment of the present invention, which is diagrammatically illustrated in Figure 4, it is proposed to reduce the risk of the transverse elements 10 fracturing by lowering the roughness value Rₐ of the transition surface 60 between the support surface 16 and the side face 25 of the recess 8 by grinding, polishing or in some other way smoothing this surface 60, so that the formation or propagation rate of a fatigue crack can be considerably reduced. According to the invention, in this case it is advantageously possible to make use of a modification to the grinding process which is known from EP-A 0 366 169, is illustrated for the side face 25 on the right-hand side of Figure 4 and in which the side face 25 is machined using a grinding belt 81 by a relative movement between the two. For the other side face 25, on the left-hand side of Figure 4, the figure illustrates the grinding process which has been modified in accordance with the present invention, wherein the transition surface 60 is machined at the same time as the side face 25, for which purpose the width of the grinding belt 82 is at least virtually equal to the combined dimensions of the side face 25 and the transition surface 60.

A second option for reducing the roughness value Rₐ of the transition surface 60 is electrochemical machining of this surface, as diagrammatically indicated in Figure 5. A process of this type can be used to obtain a particularly smooth surface of high quality. Figure 5 shows part of a device 70 for the electrochemical machining of the transition surface 60. The device 70 comprises an electrode 71 which is suitable to be introduced into the recess 8. The shape of a machining section 72 of the electrode 71 is matched to the shape of the transition surface 60, the said machining section 72 being intended to be moved into the vicinity of the said transition surface 60. With the exception of the surface at the location of the machining section 72, the entire surface of the electrode 71 which can move into the vicinity of the transverse element is provided with an insulation layer 73, in order to prevent electrochemical machining of parts of the transverse element 10 other than the transition surface 60.

To carry out the electrochemical machining of the transition surface 60, the machining section 72 of the electrode 71 is moved into the vicinity of the transition surface 60, while an electrolyte (not shown) is supplied to a space 75 between the said machining section 72 and the said transition surface 60. The electrode 71 and the transverse element 10 are connected to a voltage source 74, the transverse element 10 being positive with respect to the electrode 71 at least during part of the process time. Material of the transition surface 60 is dissolved in the electrolyte under the influence of the current which as a result is generated between the machining section 72 of the electrode 71 and the transition surface 60 via the electrolyte, the current being concentrated in particular in the highest parts of the transition surface, so that unevenness on the transition surface is removed and a smooth, high-quality surface is obtained.

The electrode 71 is advantageously suitable for the simultaneous machining of a plurality of transverse elements 10. Figure 5 shows a plan view of an electrode 71 of this type, and also illustrates a number of transverse elements 10 which adjoin one another. It is preferable for the electrode 71 to be arranged in a fixed position, and for the transverse elements 10 to be moved past the electrode 71 during the electrochemical machining process. In the preferred embodiment of the device 70 as shown in Figure 9, two electrodes 71 are used simultaneously, so that the transition surfaces 60 on either side of the transverse element 10 can be machined simultaneously.

## Claims

1. Method for producing a transverse element (10) which is intended to form part of a push belt (6) for a continuously variable transmission (1), which transverse element (10) is provided with at least one recess (8) for at least partially accommodating a support (7) of the push belt (6), the recess (8) being delimited by a supporting surface (16) for supporting the support and a side face (25) for locking the support (7) in a width direction, and the support surface (16) adjoining the side face (25) via a transition surface (60), which method comprises at least one forming step in which the transverse element (10) is cut out of base material (50) in plate form by means of a punching process, and a remachining step, in which the transverse element (10) is subjected to a deburring process, which method is **characterized by** an additional processing step, in which at least the transition surface (60) of the transverse element (10) is processed, and in which a compressive stress is introduced into the transition surface (60) in the additional processing step.

2. Method according to Claim 1, in which the forming step precedes the additional processing step and the additional processing step precedes the remachining step.

3. Method according to Claim 1 or 2, in which the additional processing step involves a shot-peening process, using an abrasive comprising relatively small, rounded steel shot having a hardness that is higher than the hardness of the transverse element after the end of the forming step.

4. Method for producing a push belt provided with transverse elements (10) produced with the aid of the method according to Claim 1, in which the additional processing step involves a nitriding process and in which also the support (7) is subjected to a nitriding process.

5. Method according to Claim 1 or 2, in which a surface roughness of the transition surface (60) is reduced in the additional processing step.

6. Method according to Claim 5, in which the additional processing step involves a grinding process using a grinding belt (82) which machines the side face (25) and the transition surface (60) simultaneously.

7. Method according to Claim 6, in which a width of the grinding belt is at least virtually equal to the combined dimension of the side face (25) and the transition surface (60) as seen in the longitudinal direction of the transverse element (10).

8. Method according to Claim 5, in which the additional processing step involves an electrochemical dissolution process, in which:
- an electrode (71) is positioned in the vicinity of the said transition surface (60);
- an electrolyte is supplied to the space (75) between the electrode (71) and the said transition surface (60); and
- an electric current is produced between the electrode (71) and the said transition surface (60), via the electrolyte.

9. Method according to Claim 8, in which the shape of the electrode (71) is matched to the shape of the transition surface (60).

10. Method according to Claim 5, in which the additional processing step involves the application of a covering layer to the transition surface (70) of the transverse element (10).

11. Method according to Claim 10, in which the layer is applied by evaporation coating, preferably with the aid of a CVD technique or a PVD technique.

## Patentansprüche

1. Verfahren zum Herstellen eines Querelements (10), das Teil eines Schubtreibriemens (6) für ein stufenloses Getriebe (1) bilden soll, wobei das Querelement (10) mit mindestens einer Aussparung (8) versehen ist, um einen Träger (7) des Schubtreibriemens (6) zumindest teilweise aufzunehmen, wobei die Aussparung (8) durch eine Stützfläche (16) zum Stützen des Trägers und eine Seitenfläche (25) zum Verriegeln des Trägers (7) in Breitenrichtung begrenzt wird und die Stützfläche (16) über eine übergangsfläche (60) an die Seitenfläche (25) angrenzt, wobei das Verfahren mindestens einen Herstellungsschritt, in dem das Querelement (10) aus plattenförmigem Basismaterial (50) mittels eines Stanzprozesses herausgeschnitten wird, und einen Nachbearbeitungsschritt, in dem das Querelement (10) einem Abgratprozess unterzogen wird, umfasst, **gekennzeichnet durch** einen zusätzlichen Bearbeitungsschritt, in dem zumindest die Übergangsfläche (60) des Querelements (10) bearbeitet wird und in dem die Übergangsfläche (60) in dem zusätzlichen Bearbeitungsschritt mit einer Druckbelastung beaufschlagt wird.

2. Verfahren nach Anspruch 1, wobei der Herstellungsschritt dem zusätzlichen Bearbeitungsschritt vorausgeht und der zusätzliche Bearbeitungsschritt dem Nachbearbeitungsschritt vorausgeht.

3. Verfahren nach Anspruch 1 oder 2, wobei der zusätzliche Bearbeitungsschritt einen Kugelstrahlprozess unter Verwendung eines Strahlmittels umfasst, das relativ kleine, abgerundete Stahlkugeln mit einer Härte, die größer ist als die Härte des Querelements nach dem Ende des Herstellungsschritts, verwendet.

4. Verfahren zur Herstellung eines Schubtreibriemens, der mit Querelementen (10) versehen ist, die mit Hilfe des Verfahrens nach Anspruch 1 hergestellt werden, wobei der zusätzliche Bearbeitungsschritt einen Nitrierprozess umfasst und wobei des Weiteren der Träger (7) einem Nitrierprozess unterzogen wird.

5. Verfahren nach Anspruch 1 oder 2, wobei eine Oberflächenrauigkeit der Übergangsfläche (60) im zusätzlichen Bearbeitungsschritt reduziert wird.

6. Verfahren nach Anspruch 5, wobei der zusätzliche Bearbeitungsschritt einen Schleifprozess unter Verwendung eines Schleifbands (82) umfasst, das die Seitenfläche (25) und die Übergangsfläche (60) gleichzeitig bearbeitet.

7. Verfahren nach Anspruch 6, wobei eine Breite des Schleifbands zumindest praktisch gleich der kombinierten Abmessung der Seitenfläche (25) und der Übergangsfläche (60), gesehen in Längsrichtung des Querelements (10), ist.

8. Verfahren nach Anspruch 5, wobei der zusätzliche Bearbeitungsschritt einen elektro-chemischen Zersetzungsprozess umfasst, in dem:
- eine Elektrode (71) in der Nähe der Übergangsfläche (60) positioniert wird;
- ein Elektrolyt dem Raum (75) zwischen der Elektrode (71) und der Übergangsfläche (60) zugeführt wird; und
- über den Elektrolyt ein elektrischer Strom zwischen der Elektrode (71) und der Übergangsfläche (60) erzeugt wird.

9. Verfahren nach Anspruch 8, wobei die Form der Elektrode (71) der Form der Übergangsfläche (60) angepasst ist.

10. Verfahren nach Anspruch 5, wobei der zusätzliche Bearbeitungsschritt das Aufbringen einer Deckschicht auf die Übergangsfläche (60) des Querelements (10) umfasst.

11. Verfahren nach Anspruch 10, wobei die Schicht durch Aufdampfen, vorzugsweise mit Hilfe einer CVD-Technik oder einer PVD-Technik, aufgebracht wird,

## Revendications

1. Procédé de production d'un élément transversal (10) destiné à faire partie d'une courroie (6) de poussée pour transmission (1) à variation continue, ledit élément transversal (10) étant pourvu d'au moins une échancrure (8) destinée à loger au moins partiellement un support (7) de la courroie (6) de poussée, l'échancrure (8) étant délimitée par une surface (16) d'appui destinée à soutenir le support et une face latérale (25) destinée à bloquer le support (7) dans un sens de la largeur, et la surface (16) d'appui rejoignant la face latérale (25) via une surface (60) de transition, ledit procédé comportant au moins une étape de formation dans laquelle l'élément transversal (10) est découpé à partir d'un matériau (50) de base sous forme de plaque au moyen d'un processus de poinçonnage, et une étape de ré-usinage dans laquelle l'élément transversal (10) est soumis à un processus d'ébavurage, ledit procédé étant **caractérisé par** une étape supplémentaire de traitement dans laquelle au moins la surface (60) de transition de l'élément transversal (10) est traitée et dans laquelle une contrainte de compression est introduite dans la surface (60) de transition lors de l'étape supplémentaire de traitement.

2. Procédé selon la revendication 1, dans lequel l'étape de formation précède l'étape supplémentaire de traitement et l'étape supplémentaire de traitement précède l'étape de ré-usinage.

3. Procédé selon la revendication 1 ou 2, dans lequel l'étape supplémentaire de traitement fait intervenir un processus de grenaillage à l'aide d'un abrasif comportant une grenaille d'acier ronde, relativement fine, présentant une dureté supérieure à la dureté de l'élément transversal après la fin de l'étape de formation.

4. Procédé de production d'une courroie de poussée pourvue d'éléments transversaux (10) produits à l'aide du procédé selon la revendication 1, dans lequel l'étape supplémentaire de traitement fait intervenir un processus de nitruration et dans lequel le support (7) est également soumis à un processus de nitruration.

5. Procédé selon la revendication ou 2, dans lequel une rugosité de surface de la surface (60) de transition est réduite lors de l'étape supplémentaire de traitement.

6. Procédé selon la revendication 5, dans lequel l'étape supplémentaire de traitement fait intervenir un processus de rectification utilisant une courroie (82) de rectification qui usine simultanément la face latérale (25) et la surface (60) de transition.

7. Procédé selon la revendication 6, dans lequel une largeur de la courroie de rectification est au moins quasiment égale à la dimension combinée de la face latérale (25) et de la surface (60) de transition vues dans la direction longitudinale de l'élément transversal (10).

8. Procédé selon la revendication 5, dans lequel l'étape supplémentaire de traitement fait intervenir un processus de dissolution électrochimique, dans lequel :
- une électrode (71) est positionnée au voisinage de ladite surface (60) de transition ;
- un électrolyte est amené jusqu'à l'espace (75) situé entre l'électrode (71) et ladite surface (60) de transition ; et
- un courant électrique est produit entre l'électrode (71) et ladite surface (60) de transition, via l'électrolyte.

9. Procédé selon la revendication 8, dans lequel la forme de l'électrode (71) correspond à la forme de la surface (60) de transition.

10. Procédé selon la revendication 5, dans lequel l'étape supplémentaire de traitement fait intervenir l'application d'une couche de couverture à la surface (60) de transition de l'élément transversal (10).

11. Procédé selon la revendication 10, dans lequel la couche est appliquée par revêtement à évaporation, de préférence à l'aide d'une technique de CVD ou d'une technique de PVD.
